# DEMANDE DE BREVET EUROPEEN

(11) **EP 0 605 325 A1**
(43) Date de publication de la demande: **06.07.1994**
(21) Numéro de dépôt: 93403198.0
(22) Date de dépôt: 28.12.1993
(51) Int. Cl.: B60K 11/08, B60H 1/34, F28F 27/00, F24F 13/15

(54) **Dispositif de régulation d'un flux d'air dans un passage de circulation, en particulier pour un radiateur de refroidissement de véhicule automobile**

(30) Priorité: 31.12.1992 FR 9216005
(71) Demandeur: VALEO THERMIQUE MOTEUR, 78320 Le Mesnil Saint-Denis (FR)
(72) Inventeur: Collette, Thierry, F-78000 Versailles (FR)
(74) Mandataire: Gamonal, Didier

(57) **Abrégé**

L'invention concerne un dispositif de régulation d'un flux d'air dans un passage de circulation d'air, en particulier pour un radiateur de refroidissement de véhicule automobile.

Le dispositif comprend une multiplicité de volets pivotants (28) venus de moulage avec un cadre support (22) ayant une multiplicité de poutres profilées parallèles (24) sur chacune desquelles s'articule un volet (28) par une charnière souple (30) également venue de moulage avec le volet et la poutre profilée.

Application notamment aux radiateurs de refroidissement des véhicules automobiles.

## Description

L'invention concerne un dispositif de régulation d'un flux d'air dans un passage de circulation, destiné en particulier à un radiateur de refroidissement de véhicule automobile.

Il est connu de disposer, dans le trajet de circulation d'un flux d'air traversant un radiateur de refroidissement, une multiplicité de volets montés pivotants autour d'axes parallèles et propres à prendre une multiplicité de positions angulaires différentes, comprises entre une position d'ouverture et une position de fermeture, sous l'action de moyens de commande appropriés.

On obtient ainsi un dispositif s'apparentant à une jalousie qui permet d'ajuster le débit d'air traversant le radiateur de refroidissement du moteur du véhicule et d'optimiser l'efficacité du radiateur ainsi que la température de fonctionnement du moteur.

Ce dispositif de régulation est habituellement placé dans une gaine de circulation reliant la calandre du véhicule au radiateur de refroidissement. Les moyens de commande comprennent généralement un actionneur qui fait pivoter les volets en synchronisme en fonction de différents paramètres, et notamment de la température du fluide de refroidissement circulant dans le radiateur.

On connaît, d'après le document FR-A-2 541 200, un dispositif de régulation du type précité qui comprend une multiplicité de volets pivotants venus de moulage avec un cadre support auquel ils sont articulés chacun par des charnières souples pour permettre leur déplacement entre une position d'ouverture et une position de fermeture dans lesquelles la circulation du flux d'air est respectivement autorisée et interdite dans le passage de circulation.

Les charnières souples précitées, que l'on appelle aussi "charnières films", sont venues de moulage avec les volets et le cadre support et obtenues par amincissement local de la matière, généralement une matière plastique, pour former un film mince déformable permettant l'articulation du volet.

Dans le dispositif du document précité, le cadre support est articulé à l'une des extrémités de chaque volet et il est prévu en outre un autre cadre qui est articulé à l'autre extrémité de chaque volet.

Ce second cadre complique la fabrication du dispositif et entraîne en outre un encombrement de ce dispositif dans sa dimension parallèle à la direction de circulation du flux d'air.

Au surplus, la rigidité de ce dispositif connu n'est pas toujours suffisante.

L'invention a notamment pour but de surmonter les inconvénients précités.

C'est en particulier un but de l'invention de procurer un dispositif de régulation du type précité qui peut être fabriqué de façon particulièrement simple.

C'est encore un but de l'invention de procurer un tel dispositif de régulation qui possède un encombrement réduit, en particulier dans sa dimension parallèle à la direction de circulation du flux d'air.

C'est encore un autre but de l'invention de procurer un tel dispositif de régulation qui possède une construction rigide, tout en étant léger.

L'invention propose à cet effet un dispositif de régulation du type précité, dans lequel le cadre comprend une multiplicité de poutres profilées, parallèles entre elles et reliées à deux montants d'extrémité, et dans lequel chaque volet est articulé à une poutre par une charnière souple également venue de moulage avec le volet et la poutre profilée.

Ce dispositif ne nécessite qu'un seul cadre support, lequel peut être implanté en un endroit approprié dans un passage de circulation d'air, par exemple dans une gaine menant à un radiateur de refroidissement d'un véhicule automobile.

Du fait que le cadre support comprend une multiplicité de poutres profilées reliées à deux montants d'extrémité, celui-ci possède une structure particulièrement rigide.

Les poutres ont avantageusement un profil aérodynamique choisi pour ne pas perturber l'aérodynamisme du véhicule, et cela quelle que soit la position des volets.

Dans une forme de réalisation préférée de l'invention, chaque poutre profilée possède une section transversale en forme générale de U dont l'ouverture est tournée dans la direction opposée à la direction de circulation du flux d'air.

On obtient ainsi une poutre de profil aérodynamique qui possède en même temps une construction rigide et légère.

Avantageusement, la poutre profilée en U comprend un fond et deux ailes se raccordant sensiblement à angle droit au fond.

Selon une autre caractéristique de l'invention, chaque volet se rattache à la poutre dans la région de raccordement du fond et d'une des ailes, laquelle s'étend dans une direction sensiblement perpendiculaire à la direction de circulation du flux d'air.

Comme chaque volet est articulé dans la région de raccordement du fond et d'une des ailes, c'est-à-dire dans la partie antérieure du profil de la poutre par rapport à la direction de circulation du flux d'air, le dispositif est particulièrement peu encombrant dans cette direction.

Chaque volet est susceptible de pivoter sur environ un quart de tour entre une position d'ouverture en laquelle il vient en butée contre la poutre à laquelle il est articulé et une position de fermeture en laquelle il vient en butée contre une poutre adjacente. Les poutres du cadre support servent ainsi de butées limitant la course de pivotement des volets.

Selon une autre caractéristique de l'invention, chaque poutre comporte des nervures transversales de rigidification.

Avantageusement, chaque volet comprend une lame plane rectangulaire munie de nervures de rigidification.

Conformément à l'invention, la charnière souple comprend avantageusement au moins un pont de matière formé par amincissement local de la matière dont sont formés le cadre support et les volets. Un tel amincissement peut être réalisé, soit sur toute la longueur d'un volet, soit sur une partie de sa longueur pour diminuer la résistance au pivotement.

Selon une autre caractéristique de l'invention, chaque volet comprend un axe de commande situé dans une région intermédiaire du volet et à distance de l'articulation de la charnière, et le dispositif comprend un bras de commande déplaçable en translation orthogonalement aux axes d'articulation des charnières des volets et comportant une multiplicité de logements propres à recevoir les axes de commande respectifs des volets.

Ce bras de commande peut être déplacé par un actionneur approprié, par exemple un vérin tel qu'un vérin à dépression.

Dans la description qui suit, faite à titre d'exemple, on se réfère aux dessins annexés, sur lesquels :
- la figure 1 est une vue de côté, avec arrachement partiel, d'un échangeur de chaleur muni d'un dispositif de régulation selon l'invention dans lequel les volets sont en position de fermeture;
- la figure 2 est une vue analogue à celle de la figure 1, dans laquelle les volets sont en position d'ouverture;
- la figure 3 est une vue en plan de l'arrière du dispositif montrant une poutre et un volet en position de fermeture, ainsi qu'une partie du cadre support;
- la figure 4 est une vue de côté du dispositif de la figure 3;
- la figure 5 est une vue en coupe à échelle agrandie selon la ligne V-V de la figure 3; et
- la figure 6 est un détail de la figure 5, à échelle agrandie.

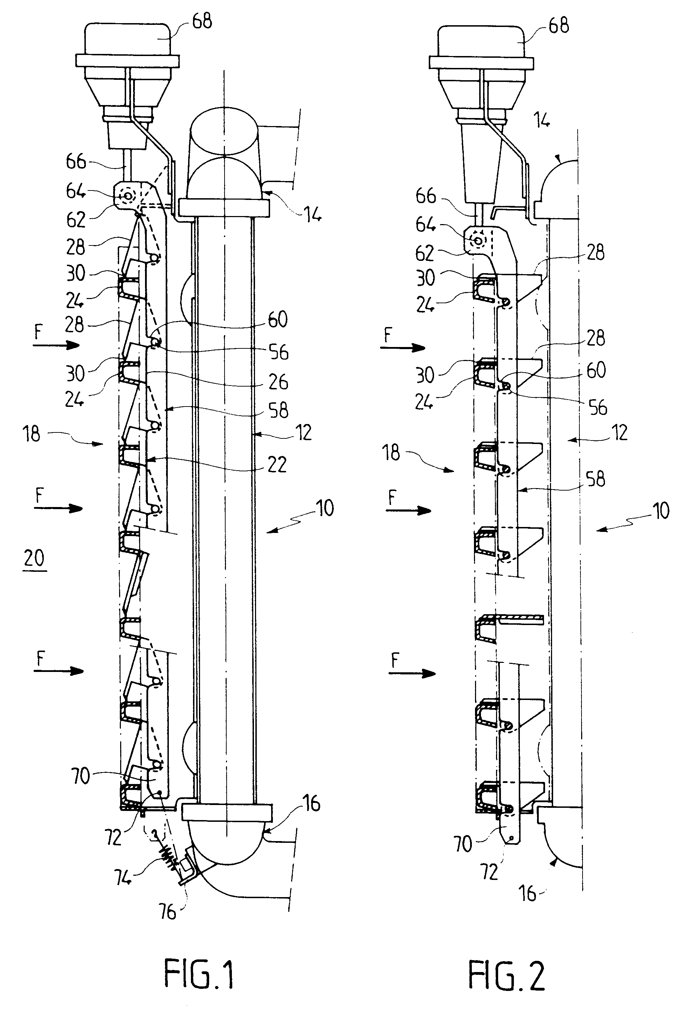

On se réfère tout d'abord à la figure 1 qui représente un radiateur 10 destiné au refroidissement du moteur d'un véhicule automobile et comprenant, de façon en soi connue, un faisceau 12 de tubes à ailettes, interposé entre deux boîtes à eau 14 et 16.

Le radiateur 10 est équipé d'un dispositif de régulation 18 selon l'invention qui a pour fonction de réguler le débit d'un flux d'air traversant le faisceau 12, comme indiqué par les flèches F. Le dispositif de régulation 18 est placé en amont du radiateur 10, par rapport à la direction de circulation du flux d'air, et il est logé dans une conduite 20 reliant la calandre du véhicule (non représentée) et le radiateur 10. Le dispositif de régulation 18 a pour fonction d'optimiser la température du fluide circulant dans l'échangeur de chaleur et d'optimiser ainsi le fonctionnement du moteur.

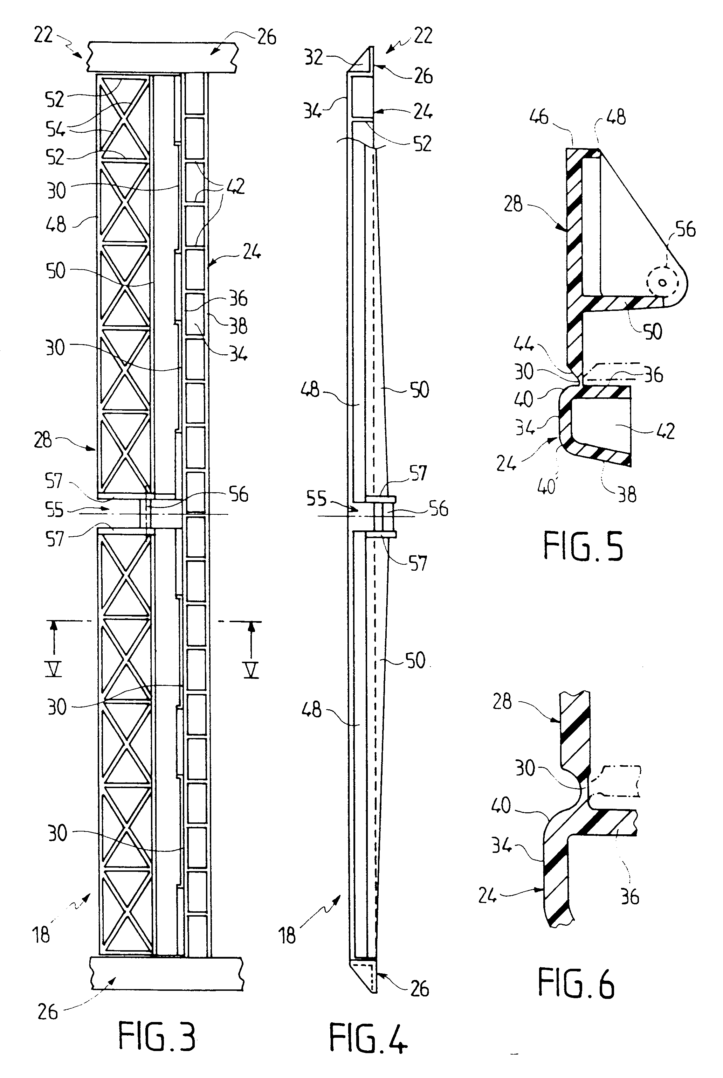

Le dispositif 18 est réalisé sous la forme d'un ensemble monobloc venu de moulage à partir d'une matière plastique appropriée, par exemple du polypropylène non chargé. Cet ensemble monobloc comprend un cadre support 22 possédant une multiplicité de poutres profilées 24 parallèles entre elles et reliées chacune à deux montants d'extrémité 26 (figures 3 et 4).

Sur chacune des poutres profilées 24 est articulé un volet pivotant 28 par une charnière souple 30 également venue de moulage avec l'ensemble et constituant l'axe d'articulation du volet.

Comme montré à la figure 4, chacun des montants d'extrémité 26 est réalisé sous la forme d'une cornière munie, à intervalles réguliers, de cloisons internes 32 servant d'entretoises de rigidification.

Les poutres profilées 24 s'étendent dans des directions parallèles entre elles et dans un même plan, chacune d'entre elles possédant une section transversale en forme générale de U dont l'ouverture est tournée dans la direction opposée à la direction de circulation du flux d'air (flèches F). Chaque poutre possède ainsi un profil aérodynamique minimisant les pertes de charge subies par le flux d'air.

Comme montré plus particulièrement aux figures 3 à 5, chaque poutre profilée 24 comprend un fond généralement plat 34 s'étendant dans une direction sensiblement perpendiculaire à la direction de circulation du flux d'air (flèches F). La poutre 24 comprend en outre deux ailes 36 et 38 se raccordant sensiblement à angle droit au fond 34, respectivement par des bords arrondis 40 et 40' (figure 5).

Comme montré plus particulièrement aux figures 5 et 6, chaque volet 28 se rattache à la poutre 24 correspondante dans la région de raccordement du fond 34 et de l'aile 36, c'est-à-dire à proximité du bord arrondi 40. La charnière souple 30, que l'on peut appeler également "charnière-film" ou "charnière intégrale", est formée par un amincissement localisé de la matière constitutive de l'ensemble du dispositif. Cet amincissement localisé de la matière autorise sa déformation pour faire pivoter le volet 28 sur environ un quart de tour entre une position de fermeture et une position d'ouverture représentées respectivement en traits pleins et en traits fantômes sur les figures 5 et 6.

Sur ces deux figures, le débattement angulaire entre les deux positions précitées est effectivement d'un quart de tour. En pratique, le pivotement peut se faire sur moins d'un quart de tour, comme il résulte d'une comparaison des figures 1 et 2 dans lesquelles les volets 28 sont respectivement en position de fermeture et d'ouverture.

Comme on peut le voir sur les figures 3 à 5, chacune des poutres 24 comprend une multiplicité de cloisons intermédiaires 42 réunissant les deux ailes et le fond pour former entretoise de rigidification. Chacun des volets 28 a la forme d'une lame de forme rectangulaire limitée par deux bords longitudinaux parallèles, à savoir un bord biseauté 44 qui s'amincit pour former la charnière souple 30, et un bord libre 46.

Dans l'exemple, la charnière souple 30 est formée de quatre ponts de matière (figure 3) qui s'étendent seulement sur une partie de la longueur du bord 44 pour diminuer la résistance au pivotement. En variante, la charnière souple pourrait s'étendre sur toute la longueur du bord 44.

La lame du volet 28 est munie d'une nervure longitudinale 48 qui s'étend le long du bord 46 et d'une autre nervure longitudinale 50 qui s'étend parallèlement à la nervure 48 et à distance du bord 44 pour permettre le pivotement du volet vers sa position d'ouverture. Le volet 28 comprend en outre une multiplicité de nervures transversales 52 reliant les nervures 48 et 50 et une multiplicité de nervures croisées 54. L'ensemble de ces nervures permet de rigidifier le volet 28 pour former une structure rigide et légère. Ces nervures sont formées sur la face du volet qui est opposée à celle exposée au flux d'air.

Le volet 28 ménage en son milieu un espace vide 55 qui est délimité entre deux nervures 57 de forme générale trapézoïdale qui s'étendent parallèlement entre elles et perpendiculairement aux bords longitudinaux 44 et 46 du volet. Entre les deux nervures 57 est également venu de moulage un axe 56 (figures 3 à 5) servant d'axe de commande pour le déplacement du volet entre sa position de fermeture et sa position d'ouverture.

Le dispositif 18 comprend en outre des moyens de commande pour faire pivoter en synchronisme les volets 28. Ces moyens comprennent un bras de commande 58 (figures 1 et 2) qui s'étend dans une direction orthogonale aux axes de pivotement des volets 28 et à égale distance de ces derniers. Le bras 58 comporte, en correspondance de chaque volet 28, un logement 60 en forme de fente ouverte dans laquelle s'engage l'axe de commande 56 du volet. Chaque logement 60 est fermé par un clip ou analogue (non représenté) pour empêcher l'axe 56 de quitter le logement 60.

Le bras 58 possède une extrémité 62 située du côté de la boîte à eau 14 et articulée en 64 sur l'extrémité libre d'une tige 66 d'un vérin à dépression 68.

L'autre extrémité 70 du bras 58 est reliée en 72 à un ressort de rappel 74 qui est en outre rattaché à une équerre 76 vissée sur la boîte à eau 16. Le vérin 68 peut être commandé en fonction de différents paramètres liés au fonctionnement du véhicule, et en particulier en fonction de la température du liquide de refroidissement circulant dans le radiateur 10. Dans la position de la figure 1, dans laquelle la tige 66 du vérin est rétractée et le ressort 74 est déployé, chacun des volets est dans sa position de fermeture, son bord libre 46 venant en butée contre l'aile 38 d'une poutre 24 adjacente. Dans cette position, les volets 28 obturent complètement la gaine 20 et empêchent l'air de traverser le faisceau 12 du radiateur.

Dans la position de la figure 2, dans laquelle la tige du vérin 66 est déployée et le ressort 74 contracté, chacun des volets 28 est dans sa position d'ouverture dans laquelle il vient en butée contre l'aile 36 de la poutre 24 à laquelle il est rattaché. Dans cette position, on obtient un débit d'air maximal à travers le faisceau 12 du radiateur 10.

Les volets 28 peuvent prendre aussi une infinité de positions intermédiaires entre leur position de fermeture et leur position d'ouverture.

On obtient ainsi un dispositif qui peut être réalisé facilement par moulage d'une matière plastique et qui possède un faible nombre de pièces.

Ce dispositif est d'une construction légère et résistante et en même temps peu encombrant.

Le dispositif est avantageusement fixé directement sur le radiateur de refroidissement ou bien sur les parois de la gaine menant à ce radiateur.

L'invention n'est pas limitée à la forme de réalisation décrite et représentée à titre d'exemple et s'étend à d'autres variantes. Ainsi, la poutre profilée n'est pas nécessairement une poutre à profil en U.

## Revendications

**1.-** Dispositif de régulation d'un flux d'air dans un passage de circulation, en particulier pour un radiateur de refroidissement de véhicule automobile, comprenant une multiplicité de volets pivotants venus de moulage avec un cadre support auquel ils sont articulés par des charnières souples, pour permettre leur déplacement entre une position d'ouverture où la circulation du flux d'air est autorisée, et une position de fermeture où la circulation du flux d'air est interrompue, caractérisé en ce que le cadre support (22) comprend une multiplicité de poutres profilées (24), parallèles entre elles et reliées à deux montants d'extrémité (26) et en ce que chaque volet (28) est articulé à une poutre profilée (24) par une charnière souple (30) également venue de moulage avec le volet et la poutre profilée.

**2.-** Dispositif selon la revendication 1, caractérisé en ce que chaque poutre profilée (24) possède une section transversale en forme générale de U dont l'ouverture est tournée dans la direction opposée à la direction de circulation (F) du flux d'air.

**3.-** Dispositif selon la revendication 2, caractérisé en ce que la poutre profilée (24) en U comprend un fond (34) et deux ailes (36,38) se raccordant sensiblement à angle droit avec ce fond.

**4.-** Dispositif selon la revendication 3, caractérisé en ce que chaque volet (28) se rattache à la poutre (24) dans la région de raccordement (40) du fond (34) et d'une des ailes (36), laquelle s'étend dans une direction sensiblement perpendiculaire à la direction de circulation (F) du flux d'air.

**5.-** Dispositif selon l'une des revendications 1 à 4, caractérisé en ce que chaque volet (28) est susceptible de pivoter sur environ un quart de tour entre une position d'ouverture dans laquelle il vient en butée contre la poutre (24) sur laquelle il est articulé et une position de fermeture dans laquelle il vient en butée contre une poutre (24) adjacente.

**6.-** Dispositif selon l'une des revendications 1 à 5, caractérisé en ce que chaque poutre profilée (24) comporte des nervures transversales de rigidification (42).

**7.-** Dispositif selon l'une des revendications 1 à 6, caractérisé en ce que chaque volet (28) comprend une lame plane rectangulaire munie de nervures de rigidification (48,50,52,54).

**8.-** Dispositif selon l'une des revendications 1 à 7, caractérisé en ce que la charnière souple (30) comprend au moins un pont de matière formé par amincissement local de la matière dont est formé le cadre support (22) et les volets (28).

**9.-** Dispositif selon l'une des revendications 1 à 8, caractérisé en ce que chaque volet (28) comprend un axe de commande (56) situé dans une région intermédiaire du volet et à distance de l'articulation de la charnière souple (30), et en ce qu'il comprend un bras de commande (58) déplaçable en translation, orthogonalement aux axes d'articulation des charnières des volets, et comportant une multiplicité de logements (60) propres à recevoir les axes de commande respectifs (56) des volets.

**10.-** Dispositif selon l'une des revendications 1 à 9, caractérisé en ce que le cadre support (22) et les volets (28) sont venus de moulage d'une seule pièce à partir d'une matière plastique, par exemple du polypropylène non chargé.
